# EUROPEAN PATENT SPECIFICATION

(11) **EP 1 347 714 B1**
(45) Date of publication and mention of the grant of the patent: **16.11.2005**
(21) Application number: 01272997.6
(22) Date of filing: 27.12.2001
(51) Int. Cl.: A61C 13/00

(54) **DEVICE FOR FORMING HOLES AND INSERTING SLEEVES IN A UNIT INCORPORATED IN A DENTAL ATTACHMENT PART**
VORRICHTUNG ZUR BILDUNG VON LÖCHERN UND EINFÜHRHÜLSEN IN EINER IN EINEM DENTALBEFESTIGUNGSTEIL ENTHALTENEN EINHEIT
DISPOSITIF PERMETTANT DE FORMER DES TROUS ET DES MANCHONS D'INSERTION DANS UNE UNITE INCORPOREE DANS UN ELEMENT DE FIXATION DENTAIRE

(30) Priority: 29.12.2000 SE 0004885
(43) Date of publication of application: 01.10.2003
(73) Proprietor: Nobel Biocare AB (publ), 402 26 Göteborg (SE)
(72) Inventor: BRAJNOVIC, Izidor, S-433 30 Partille (SE)
(74) Representative: Olsson, Gunnar
(86) International application number: PCT/SE2001/002899
(87) International publication number: WO 2002/053057

(56) References cited:
- WO-A1-94/14388

## Description

The present invention relates to a device for forming holes and inserting sleeves in a unit incorporated in an attachment part intended for the human body, for example a dental attachment part which can consist of a dental bridge. The unit can also be incorporated in or intended for a template for forming holes in bone, for example jaw-bone. The unit comprises a shell and, arranged in the latter, a substance or agent, for example matrix material, which is viscous in at least an initial forming stage and which gives the unit a certain resiliency property or is resilient as a function of an action on the unit.

In the production of a dental bridge, for example, the latter can be produced using a model, for example a plastic model, which is provided with fixture dummies. The model or plastic model can represent a model of a patient's jaw or jaw bone. The unit, i.e. the template or dental bridge, must be provided with laboratory spacers or bridge sleeves and can consist of carbon fiber-reinforced plastic. In an initial stage, the unit consists of a tube or shell and; placed in the latter, a carbon fiber reinforcement. A matrix material is additionally introduced, for example in the form of acrylic plastic which is injected into the shell or tube. In the production of the template or tooth replacement, the latter undergoes a desired shaping with the aid of molds, and, when the desired shape has been obtained, the matrix material is made to harden or stiffen so that the template or tooth replacement is assigned the desired shape. In connection with the production of the tooth replacement or the assembly template, a stage is included in which holes are to be formed in the soft unit and sleeves are to be applied in the holes thus formed.

In this connection, reference is made to Swedish Patent 457,691 which relates to a method for producing prosthetic structures made of composite material with a considerable fiber content. It is thus known per se to use these types of tooth replacements and assembly templates. Reference is also made to the patent application "Device for determining position" which was filed by the same Applicant on the same day as the present patent application.

Holes are to be formed and sleeves are to be inserted in connection with fixtures or fixture dummies in a patient's jaw or on a model. The problem in this connection is to obtain a distinct and precise positioning of the sleeves in question, and it must be possible for their position to be determined with great accuracy in relation to the fixture dummies or fixtures. The invention deals, inter alia, with this problem and solves the problem in question.

Since the unit at this stage comprises at least viscous material or substance, it is difficult to prevent the material or agent from running out or leaking from the unit during sleeve application. There is therefore a need for effective enclosure of the agent when the holes are being formed. The invention solves this problem too.

In this connection, there is a need to be able to carry out the application in a relatively straightforward way and at the same time to maintain the precise positioning of the sleeves in relation to the dummies or the fixtures. The invention solves this problem too.

The features which can principally be regarded as characterizing a device according to the invention are that it comprises a perforating part by means of which the shell and the substance can be penetrated and can be pushed aside counter to the effect of the abovementioned resiliency in order to form holes or recesses, and that it has a sleeve-supporting portion which is situated behind or under the perforating part and by means of which a sleeve assumes a position in the hole or recess and exposes its outside to said pushed-aside and resilient shell and the substance or agent. The invention is additionally characterized by the fact that the perforating part and the sleeve are arranged to prevent any substantial leakage of the substance or agent during the penetration and the sleeve application and that the perforating part comprises a first cone-shaped part or point followed by a cylindrical part and a larger truncated conical part.

Embodiments of the inventive concept are set out in the attached dependent claims. As an example, use is made of spacers which can be cut off and a perforating tip which is screwed into the fixture dummy or equivalent. By means of the spacer, the position for the sleeve in question is determined, and, by means of the perforating tip, an effective penetration is executed. After the unit part in question has been penetrated, it is pressed further down over the sleeve which is supported by both the penetrating tip and the spacer. A pressing member with side parts which can be expanded and which cooperate with the template during the pressing-down on the penetrating part is also included.

By means of, what has been proposed above, it is possible to obtain precise methods and devices for said formation of holes and insertion of sleeves in units of said type. The parts included in the invention are designed for simple and precise cooperation with the fixtures or fixture dummies in question. After the perforating, the perforating part or perforating tip can be easily removed and the casting molds in question can be applied to the template. There are also economic advantages because all subsequent work caused by leakage can be avoided.

A presently proposed embodiment of a device having the characteristic features of the invention will be described below with reference to the attached drawings, in which:
Figure 1 is a vertical view and partial cutaway view showing the device in connection with the production of an assembly template, which production is carried out in connection with a model of the jaw bone, the assembly template being intended to be transferred to a patient's jaw bone for guiding hole-forming members (drills),
Figure 2 is a vertical view and partial cutaway view showing the device in connection with a tooth replacement part in the form of a bridge skeleton, the bridge skeleton too being under construction on a model of a jaw bone and a model of the gum,
Figure 3 is a side view showing an auxiliary application means which can be used for pressing the model (template) down over a perforating tip, and
Figure 4 is a side view showing the pressing-down over the perforating tip.

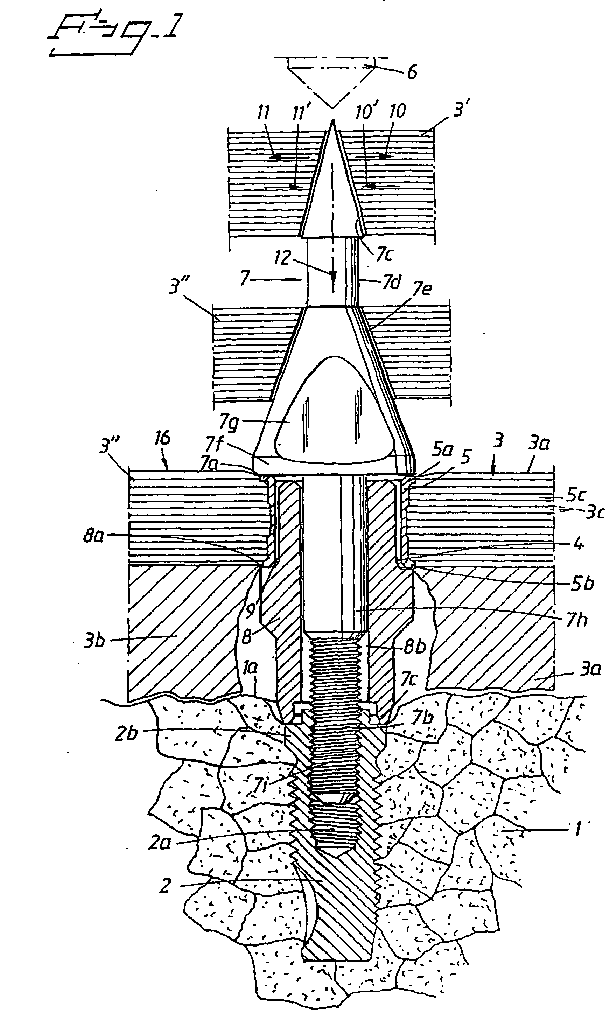

In Figure 1, a model of a jaw bone is indicated by 1. The model can be produced in a manner known per se, for example by means of stereolithography. A number of fixture dummies are preferably placed in the model, one fixture dummy having been indicated by 2. An assembly template for the model is to be produced and, in the illustrative embodiment, is made of or comprises carbon fiber-reinforced plastic. At this stage the assembly template has the above-described soft or yielding and to some extent resilient constitution. The template 3 must be provided with a number of recesses 4. In connection with the hole formation, sleeves 5 made of metal or alloy (e.g. titanium) are to be applied in the recesses so that a subsequent hole formation in the patient's jaw bone can be performed with the aid of the assembly template. In Figure 1, parts of such a hole-forming member have been indicated by 6. The hole-forming member is not used in connection with the model, but instead for forming holes in the patient's jaw, but it has nonetheless been shown in the situation illustrated in Figure 1.

The device comprises a perforating tip 7 and a spacer 8. The perforating tip is used to penetrate through the material of the template in connection with the hole formation. The spacer 8 defines the position of the sleeve 5, i.e. the position of the hole 4, in relation to the fixture 2. The perforating tip 7 and the spacer 8 form between them a space 9 in which the loose spacer is applied before the hole is formed. The perforating tip is provided with an end part 7a and the spacer with an outwardly projecting flange or shoulder 8a which extends over the end parts 5a and 5b of the sleeve. In the free position, the perforating tip and the spacer are arranged loosely in relation to one another, and the sleeve 5 is applied in such a way that it is arranged on the spacer which is then brought together with the perforating tip to the position shown in Figure 1. The fixture 2 is provided with an internal thread 2a, and the perforating tip with an external thread, by means of which threads 2a and 7b the perforating tip can be screwed into the fixture to the position shown in Figure 1. The upper parts 2b of the fixture dummy and the lower parts 7c of the spacer are designed for mutual cooperation in a manner known per se so that the spacer acquires a precise position on the fixture dummy. The perforating part comprises a first cone-shaped part or point 7c, which is followed by a cylindrical part 7d. The cylindrical part merges into another part 7e which is shaped as a truncated cone and which in turn merges into a straight part 7f which bears said end part 7a. A wrench holder 7g is arranged on the part shaped as a truncated cone. The perforating tip is also provided with a cylindrical guide part 7h, by means of which the tip is guided in the spacer via an inner surface 8b of the latter. The cylinder-shaped part 7h merges into a peg-shaped part 7i which bears said external thread 7b.

The hole-forming function is initiated by the perforating tip and spacer sleeve being brought together with the sleeve 5 placed in said recess. The perforating tip is screwed down in the dummy to the position shown in Figure 1.

The actual hole-forming function proceeds with the material of the assembly template being pressed over the point 7c of the perforating tip. In Figure 1, three different stages have been indicated by 3', 3" and 3"'. In the position 3', the point 7c has penetrated through and started the hole formation, with the result that the material of the template is pressed aside substantially radially in the directions indicated by arrows 10 and 11. The penetration and pushing-aside which take place counter to a certain resiliency function mean that the cone 7c can seal against leakage of the viscous substance or material from the inside of the unit. The material or the assembly template is pressed further down in the direction indicated by 12 and, after passing the cylinder-shaped part 7d, it reaches the part 7e which is shaped as a truncated cone and which operates with the same pushing-aside function as above. The part 7e has greater dimensions than the point 7c, with the result that a wider hole is formed, i.e. the material in the bridge is pressed further outward in the substantially radial direction. This position is indicated by 3". Said sealing function is also present in this further pressing-out. After passing the part 7e, the material or the assembly template is pressed down over the sleeve 5 to the position indicated by 3"', where the material comes to cooperate with the outside 5c of the sleeve 5. The flange-like formations 5a and 5b contribute to sealing the material off at its hole formation surface. The perforating tip can thereafter be removed and the template can be polymerized in or by means of casting molds (not shown) which are applied over the template. The hardening or stiffening of the material can be carried out in a manner known per se. The template can also be designed with support parts 3a and 3b which cooperate with the top surface 1a of the jaw bone. Said support parts can be made of silicone applied after or in connection with the shaping of the template.

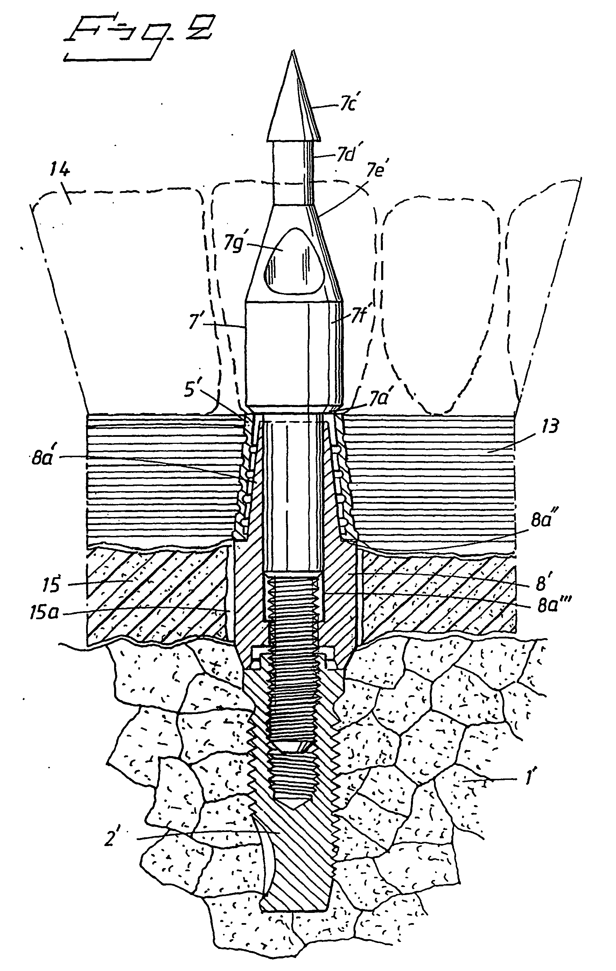

Figure 2 shows an illustrative embodiment of a tooth replacement part in the form of a bridge skeleton 13. The tooth replacement part is intended to constitute a framework for teeth, for example made of dental acrylate, as has been shown symbolically at 14. In this case too, there is a model of the jaw bone 1' and fixture dummies 2' arranged in the model. The penetrating tip 7' and the associated spacer 8' have substantially the same structure and operate with substantially the same function as in the embodiment according to Figure 1. Differences lie in the actual structure of the perforating tip. There is correspondingly a point 7c', a cylindrical part 7d' and a part 7e' shaped as a truncated cone, but whose dimensions are smaller than the part 7e in Figure 1. In this case, the cylindrical part 7f' is designed with a greater length than 7f in Figure 1. Otherwise, there are a corresponding guide part and threaded part as in the embodiment according to Figure 1. The cooperating parts between the fixture 2' and the spacer 8' are also constructed in the same way. However, one difference lies in the design of the spacer 8'. The spacer is provided with a cone-shaped part 8a' which merges into a cylindrical part 8a"' via a shoulder 8a". In contrast to the sleeve 5 in Figure 1, the sleeve 5' is in this case cone-shaped and matches the cone-shaped outer surface of the cone-shaped part 8a'. In a manner corresponding to the case according to Figure 1, the material of the unit 13 is pressed down over the tip 7c' and further down over the cone-shaped part 7e' to the position shown in Figure 2 over the cone-shaped sleeve which, before the application of the material or application of the unit, is fixed by the underside 7a' and said shoulder 8a'. The attachment shown in the figure means that the unit 13 can be pressed down over the perforating tip and the sleeve 5' without any substantial leakage by using the resiliency function or the elasticity of the material of the unit.

In accordance with the embodiments described above, the lower parts 7f and 7f' have a diameter or an external dimension which slightly exceeds or is substantially identical to the upper parts of the sleeve 5 or sleeve 5'. The sleeve 5' can be considered as being part of the above-described sealing function which confines the viscous material or substance in the unit 13. In Figure 2, the cylinder-shaped part 8a"' has a vertical extent so as to create a space for a model of a gum. Before the application of the perforating tip, the spacer and the sleeve 5a, the model 15 of the gum is applied and punched to form a hole 15a above the fixture 2'. The model 15 of the gum defines the position of the material in the unit or replacement part/skeleton. The material of the unit 13 is made to stiffen, e.g. after the perforating tip has been removed, with the aid of casting molds in a manner known per se. In the case according to Figure 2 also, there is a wrench attachment 7g' for tightening and loosening the perforating part in the fixture 2'.

In Figure 1, the shell of the material has been symbolized by 3a, the carbon fiber reinforcement by 3b, and the matrix material or agent by 3c. The resiliency function is also shown or symbolized by 10' and 11'. A function acting on the unit is also symbolized by 16.

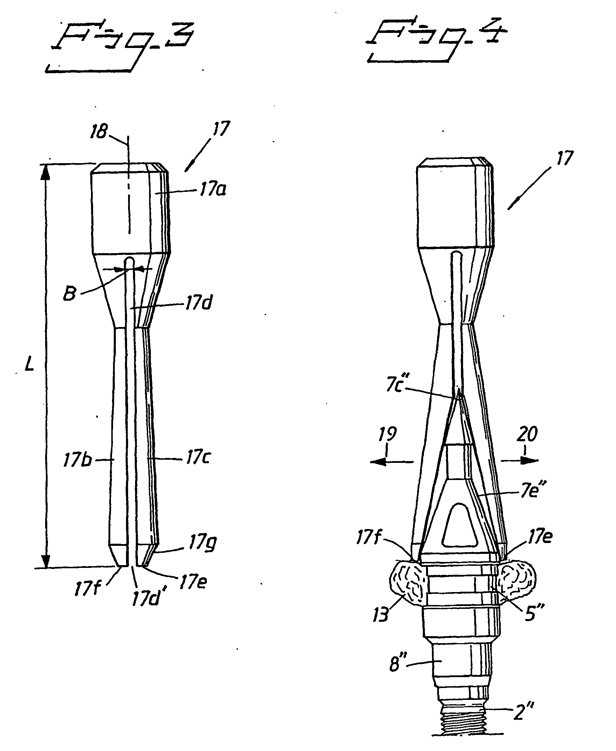

Figure 3 shows an actuating member 17 which can cooperate with the above-described template material, e.g. 3. The pressing member has a base part 17a and, connected to this, parts 17b and 17c which can be expanded or can be pressed out sideways. The member 17 can be a unit made of metal, alloy, plastic, etc. Said parts 17b and 17c which can be pressed out sideways have been obtained by means of a slit 17d which extends along the longitudinal axis 18 of the member 17. The slit extends along a length which exceeds half the length or height L of the member 17. Said parts 17b and 17c have free end surfaces 17e and 17f which are arranged on a cone-shaped part 17g. When the template material 13 is pressed down into the different positions 3', 3" and 3"' over the tip 7c" of the perforating part, the cone-shaped tip presses out in substantially radial directions 19, 20 as the template material 13 is pressed down. At the start of the pressing-down, the slit on the part 7c" ascends the opening 17d' in the slit 17d (see Figure 3). In the position shown in Figure 4, the template material has been pressed down so that .it assumes, for example, the position according to Figure 1, i.e. the position where the sleeve 5" assumes its final position in the template material 13. Said end surfaces 17f and 17e are in this case made plane so that the cooperation with the template material 13 is extensive and the shell of the template material (see 3a above) is not damaged or penetrated by the side parts 17b and 17c in question. When the pressing member is acted upon upward in Figure 4, the side parts 17b and 17c return to the position shown in Figure 3. In one embodiment, the slit 17d can be made with the same width B, with the result that the pressing-out in the radial directions 19 and 20 takes place as a function of the penetration of the cone in the slit, i.e. the longer the penetration, the more the side parts 17b and 17c are acted upon in the directions 19 and 20, and vice versa. The parts 17b and 17c can also cooperate with the cone 17e" (cf. the cone 17e in Figure 1). The part 8 in Figure 1 corresponds to 8" in Figure 4, and the implant 2 in Figure 1 corresponds to 2" in Figure 4.

The design with a cone-shaped tip which merges into a cylindrical part affords the advantage that the unit cannot slide back during hole formation, being prevented from doing so by the rear flange of the cone.

The invention is not limited to the embodiment described above by way of example, and instead it can be modified within the scope of the attached patent claims and the inventive concept.

## Claims

1. A device for forming holes and inserting sleeves in a unit (3,13) incorporated in a dental attachment part, for example a dental bridge, or a template for forming holes in bone, for example jaw-bone, said unit comprising a shell (3a) and, arranged in the latter, a substance or agent, for example matrix material (3c), which is viscous at least in an initial forming stage and which gives the unit resiliency properties or is resilient as a function of an action (16), **characterized in that** it comprises a perforating part (7) by means of which the shell and the substance can be penetrated and can be pushed aside counter to the effect of the resiliency in order to form holes or recesses, **in that** it has a sleeve-supporting portion which is situated behind or under the perforating part and by means of which a sleeve (5) assumes a position in the hole or recess and exposes its outside to said pushed-aside and resilient shell and substance or agent, and **in that** the perforating part, comprising a first cone-shaped part or point (7c) followed by a cylindrical part (7d) and a larger truncated conical part (7e), and the sleeve are arranged to prevent any substantial leakage of the substance or agent during the penetration and the sleeve application.

2. A device according to claim 1, **characterized in that** the perforating part (7) and the sleeve-supporting part (8) constitute two separate parts, of which the sleeve-supporting part consists of a spacer (8') in which the perforating part can be applied with a bearing part.

3. A device according to claim 2, **characterized in that** the spacer can be applied on a fixture dummy (2) located in a model of the bone in question, for example the jaw-bone.

4. A device according to claim 2 or 3, **characterized in that** the bearing part of the perforating part has an external thread and extends down in a recess in the fixture dummy which comprises an internal thread (2a), in which the bearing part can be screwed via its external thread (7b), and **in that** the spacer cooperates with the upper part of the fixture dummy via its first end.

5. A device according to claim 2, 3 or 4, **characterized in that** the perforating part and the spacer together form a space for the sleeve.

6. A device according to any of the preceding claims, **characterized in that** the perforating part has a front tip (7c') via which it attacks the unit.

7. A device according to any of the preceding claims, **characterized in that** the sleeve is cylindrical with outwardly projecting flanges at its ends.

8. A device according to any of the preceding claims, **characterized in that** the perforating part (7) and the spacer (8) together form an external recess for the sleeve.

9. A device according to any of the preceding claims, **characterized in that** the unit and the sleeve are included in the formation of a template (3) for forming holes in a patient's bone, for example jaw-bone.

10. A device according to any of claims 1-6, **characterized in that** the sleeve has the shape of a truncated cone (5').

11. A device according to claim 10, **characterized in that**, behind its part shaped as a truncated cone, the perforating part has another, cylindrical part.

12. A device according to either of claims 10 or 11, **characterized in that** the spacer, at its part supporting the sleeve, has an external part shaped as a cone, of which the cone corresponds to the inner cone-shaped part of the sleeve.

13. A device according to claim 10, 11 or 12, **characterized in that** the unit and the sleeve are included in the formation of an attachment part, for example part of a dental bridge (bridge skeleton) supporting tooth replacements.

14. A device according to any of claims 10-13, **characterized in that**, under or behind its sleeve-supporting part, the spacer is situated opposite a model of the gum.

15. A device according to any of claims 10-14, **characterized in that** the spacer has an external thread via which it can be screwed to the sleeve via an internal thread on the latter.

16. A device according to any of claims 10-15, **characterized in that** the sleeve has an external thread by means of which it can be unscrewed from the hardened material of the unit.

17. A device according to any of the preceding claims, **characterized in that** the unit also comprises carbon fiber reinforcements and thus consists of carbon-fiber-reinforced plastics

18. A device according to any of the preceding claims, **characterized in that**.. the perforating part can cooperate with a pressing member which has a plane surface, preferably one or more end surfaces, which can cooperate with the unit (3) in connection with the unit being pressed, for example pressed down, over the perforating part, **in that** the pressing member is also provided with parts which can be acted upon by the perforating part and which can be acted upon substantially radially outward as the pressing increases, and **in that** said parts have subsidiary surfaces which form said end surface(s).

## Patentansprüche

1. Vorrichtung zum Ausbilden von Löchern und Einführhülsen in einer in einem Dentalbefestigungsteil enthaltenen Einheit (3, 13), beispielsweise einer Dentalbrücke oder einer Schablone zum Ausbilden von Löchern in Knochen, beispielsweise in Kieferknochen, wobei die Einheit eine Hülle (3a) aufweist und in letztgenannter eine Substanz oder ein Agens, beispielsweise ein Matrixmaterial (3c) angeordnet ist, das wenigstens im Anfangsformzustand viskos ist und das der Einheit federnde Eigenschaften verleiht oder als eine Folge einer Handlung (16) federnd ist, **dadurch gekennzeichnet, dass** es ein Teil (7) aufweist, durch welches die Hülle und die Substanz durchdrungen und gegen die Federwirkung beiseite gedrückt werden kann, um Löcher oder Aussparungen auszubilden, dass sie ein Hülsenstützteil hat, das hinter oder unter dem perforierenden Teil liegt und durch das eine Hülse (5) eine Position in dem Loch oder der Aussparung einnimmt und ihre Außenseite der zur Seite gedrückten und federnden Hülle und Substanz oder dem Agens freilegt, und dass das perforierende Teil ein erstes konusförmiges Teil oder eine Spitze (7c) aufweist, auf die ein zylindrisches Teil (7d) und ein größeres konisches Teil (7e) folgt und die Hülse so angeordnet ist, dass eine Leckage der Substanz oder des Agens während dem Eindringen und der Hülsenanbringung im wesentlichen verhindert ist.

2. Vorrichtung nach Anspruch 1, **dadurch gekennzeichnet, dass** das perforierende Teil (7) und das Hülsenstützteil (8) zwei separate Teile bilden, von denen das Hülsenstützteil aus einem Abstandsstück (8') besteht, in welchem das perforierende Teil mit einem Lagerteil verwendet werden kann.

3. Vorrichtung nach Anspruch 2, **dadurch gekennzeichnet, dass** das Abstandsstück an einem Befestigungsblindstück (2) angebracht sein kann, das in einem Modell des in Frage stehenden Knochens, beispielsweise des Kieferknochens angeordnet ist.

4. Vorrichtung nach Anspruch 2 oder 3, **dadurch gekennzeichnet, dass** das Lagerteil des perforierenden Teils ein Außengewinde hat und nach unten in eine Aussparung in dem Befestigungsblindstück, das mit einem Innengewinde (2a) versehen ist, ragt, in welches das Lagerteil über sein Außengewinde (7b) eingeschraubt werden kann, und dass das Abstandsstück über sein erstes Ende mit dem oberen Teil des Befestigungsblindstückes zusammenwirkt.

5. Vorrichtung nach Anspruch 2, 3 oder 4, **dadurch gekennzeichnet, dass** das perforierende Teil und das Abstandsstück zusammen einen Raum für die Hülse bilden.

6. Vorrichtung nach einem der vorstehenden Ansprüche, **dadurch gekennzeichnet, dass** das perforierende Teil eine vordere Spitze (7c') hat, mit der es in die Einheit eingreift.

7. Vorrichtung nach einem der vorstehenden Ansprüche, **dadurch gekennzeichnet, dass** die Hülse zylindrisch ist, mit an ihren Enden nach außen vorstehenden Flanschen.

8. Vorrichtung nach einem der vorstehenden Ansprüche, **dadurch gekennzeichnet, dass** das perforierende Teil (7) und das Abstandsstück (8) zusammen eine Außenaussparung für die Hülse bilden.

9. Vorrichtung nach einem der vorstehenden Ansprüche, **dadurch gekennzeichnet, dass** die Einheit und die Hülse in der Ausbildung einer Schablone (3) zum Bilden von Löchern in dem Knochen eines Patienten, beispielsweise dem Kieferknochen, enthalten sind.

10. Vorrichtung nach einem der Ansprüche 1 bis 6, **dadurch gekennzeichnet, dass** die Hülse die Form eines Kegelstumpfes (5') hat.

11. Vorrichtung nach Anspruch 10, **dadurch gekennzeichnet, dass** das perforierende Teil hinter seinem kegelstumpfförmigen Teil ein weiteres zylindrisches Teil aufweist.

12. Vorrichtung nach einem der Ansprüche 10 oder 11, **dadurch gekennzeichnet, dass** das Abstandsstück an seinem die Hülse tragenden Teil ein Außenteil hat, das konusförmig ausgebildet ist, wobei der Konus dem inneren konusförmigen Teil der Hülse entspricht.

13. Vorrichtung nach Anspruch 10, 11 oder 12, **dadurch gekennzeichnet, dass** die Einheit und die Hülse in der Ausbildung eines Befestigungsteils, beispielsweise einem Teil einer Dentalbrücke (Brückenskelett), die zu ersetzende Zähne trägt, enthalten sind.

14. Vorrichtung nach einem der Ansprüche 10 bis 13, **dadurch gekennzeichnet, dass** unter oder hinter dem die Hülse tragenden Teil das Abstandsstück gegenüber einem Modell des Zahnfleisches liegt.

15. Vorrichtung nach einem der Ansprüche 10 bis 14, **dadurch gekennzeichnet, dass** das Abstandsstück ein Außengewinde hat, mittels welchem es in das Innengewinde der Hülse eingeschraubt werden kann.

16. Vorrichtung nach einem der Ansprüche 10 bis 15, **dadurch gekennzeichnet, dass** die Hülse ein Außengewinde hat, mit welchem es aus dem gehärteten Material der Einheit ausgeschraubt werden kann.

17. Vorrichtung nach einem der vorstehenden Ansprüche, **dadurch gekennzeichnet, dass** die Einheit auch Kohlenfaserverstärkungen aufweist und somit aus kohlenfaserverstärktem Kunststoff besteht.

18. Vorrichtung nach einem der vorstehenden Ansprüche, **dadurch gekennzeichnet, dass** das perforierende Teil mit einem Presselement zusammenwirken kann, das eine ebene Oberfläche hat, wobei vorzugsweise eine oder mehrere Endflächen, die mit der Einheit (3) beim Pressen der Einheit, beispielsweise nach unten Pressen, über den perforierenden Teil zusammenwirken können, dass das Presselement ebenfalls mit Teilen versehen ist, auf die der perforierende Teil wirken kann und auf die im wesentlichen radial nach außen gewirkt werden kann, wenn das Pressen stärker wird, und dass die Teile Hilfsflächen haben, die die Endfläche(n) bilden.

## Revendications

1. Dispositif pour former des trous et insérer des manchons dans une unité (3, 13) incorporée dans une partie de fixation dentaire, par exemple un pont dentaire, ou un gabarit pour former des trous dans un os, par exemple l'os de la mâchoire, ladite unité comprenant une coquille (3a) et, disposée dans cette dernière, une substance ou un agent, par exemple un matériau matriciel (3c), qui est visqueux au moins dans une étape initiale de formation et qui donne à l'unité des propriétés de résilience ou est résilient comme une fonction d'une action (16), **caractérisé en ce qu'**il comprend une partie perforante (7) au moyen de laquelle la coquille et la substance peuvent être introduites et peuvent être poussées à part contre l'effet de la résilience afin de former des trous ou des renfoncements, **en ce qu'**il comporte une partie supportant un manchon qui est située derrière ou sous la partie perforante et au moyen de laquelle un manchon (5) adopte une position dans le trou ou renfoncement et expose son extérieur à ladite coquille poussée à part et résiliente et à ladite substance ou audit agent, et **en ce que** la partie perforante, comprenant une première partie ou point en forme de cône (7c) suivie par une partie cylindrique (7d) et une plus grande partie conique tronquée (7e), et le manchon sont disposés pour prévenir une quelconque fuite substantielle de la substance ou de l'agent lors de l'introduction et de l'application du manchon.

2. Dispositif selon la revendication 1, **caractérisé en ce que** la partie perforante (7) et la partie supportant le manchon (8) forment deux parties séparées, dont la partie supportant un manchon est constituée d'un écarteur (8') dans lequel la partie perforante peut être appliquée avec une partie d'appui.

3. Dispositif selon la revendication 2, **caractérisé en ce que** l'écarteur peut être appliqué sur une fixation provisoire (2) située dans un modèle de l'os en question, par exemple l'os de la mâchoire.

4. Dispositif selon la revendication 2 ou 3, **caractérisé en ce que** la partie d'appui de la partie perforante comporte un filetage externe et s'étend vers le bas dans un renfoncement dans la fixation provisoire qui comprend un taraudage interne (2a), dans lequel la partie d'appui peut être vissée par l'intermédiaire de son filetage externe (7b), et **en ce que** l'écarteur coopère avec la partie supérieure de la fixation provisoire par l'intermédiaire de sa première extrémité.

5. Dispositif selon la revendication 2, 3 ou 4, **caractérisé en ce que** la partie perforante et l'écarteur forment ensemble un espace pour le manchon.

6. Dispositif selon l'une quelconque des revendications précédentes, **caractérisé en ce que** la partie perforante comporte une pointe avant (7c') par l'intermédiaire de laquelle elle attaque l'unité.

7. Dispositif selon l'une quelconque des revendications précédentes, **caractérisé en ce que** le manchon est cylindrique avec des collerettes se projetant vers l'extérieur à ses extrémités.

8. Dispositif selon l'une quelconque des revendications précédentes, **caractérisé en ce que** la partie perforante (7) et l'écarteur (8) ensemble forment un renfoncement externe pour le manchon.

9. Dispositif selon l'une quelconque des revendications précédentes, **caractérisé en ce que** l'unité et le manchon sont compris dans la formation d'un gabarit (3) pour former des trous dans l'os d'un patient, par exemple un os de mâchoire.

10. Dispositif selon l'une quelconque des revendications 1 à 6, **caractérisé en ce que** le manchon a la forme d'un cône tronqué (5').

11. Dispositif selon la revendication 10, **caractérisé en ce que**, derrière sa partie en forme de cône tronqué, la partie perforante comporte une autre partie cylindrique.

12. Dispositif selon l'une ou l'autre des revendications 10 ou 11, **caractérisé en ce que** l'écarteur, au niveau de sa partie supportant le manchon, comporte une partie externe en forme de cône, dont le cône correspond à la partie en forme de cône interne du manchon.

13. Dispositif selon la revendication 10, 11 ou 12, **caractérisé en ce que** l'unité et le manchon sont compris dans la formation d'une partie de fixation, par exemple une partie d'un pont dentaire (armature de pont) supportant des remplacements de dent.

14. Dispositif selon l'une quelconque des revendications 10 à 13, **caractérisé en ce que**, sous ou derrière sa partie supportant le manchon, l'écarteur est situé à l'opposé d'un modèle de la gencive.

15. Dispositif selon l'une quelconque des revendications 10 à 14, **caractérisé en ce que** l'écarteur comporte un filetage externe par l'intermédiaire duquel il peut être vissé au manchon par l'intermédiaire d'un taraudage interne sur ce dernier.

16. Dispositif selon l'une quelconque des revendications 10 à 15, **caractérisé en ce que** le manchon comporte un filetage externe au moyen duquel il peut être dévissé du matériau durci de l'unité.

17. Dispositif selon l'une quelconque des revendications précédentes, **caractérisé en ce que** l'unité comprend également des renforts en fibre de carbone et comprend de ce fait du plastique renforcé par des fibres de carbone.

18. Dispositif selon l'une quelconque des revendications précédentes, **caractérisé en ce que** la partie perforante peut coopérer avec un élément de pression qui comporte une surface plane, de préférence une ou plusieurs surfaces d'extrémité, qui peuvent coopérer avec l'unité (3) en connexion avec l'unité en train d'être pressée, par exemple pressée vers le bas, sur la partie perforante, **en ce que** l'élément de pression est également muni de parties qui peuvent être actionnées par la partie perforante et qui peuvent être actionnées de façon sensiblement radiale vers l'extérieur au fur et à mesure que la pression augmente, et **en ce que** lesdites parties comportent des surfaces auxiliaires qui forment ladite ou lesdites surfaces d'extrémité.
